# FASCICULE DE BREVET EUROPEEN

(11) **EP 1 891 199 B1**
(45) Date de publication et mention de la délivrance du brevet: **11.03.2009**
(21) Numéro de dépôt: 06764783.4
(22) Date de dépôt: 14.06.2006
(51) Int. Cl.: C12G 3/08

(54) **PROCEDE DE PREPARATION D'UNE BOISSON FERMENTEE PEU ALCOOLISEE**
VERFAHREN ZUR HERSTELLUNG EINES VERGORENEN GETRÄNKS MIT GERINGEM ALKOHOLGEHALT
METHOD FOR PREPARING A FERMENTED BEVERAGE WITH LOW ALCOHOL CONTENT

(30) Priorité: 17.06.2005 FR 0506141
(43) Date de publication de la demande: 27.02.2008
(73) Titulaire: AB7 Industries, 31450 Deyme (FR)
(72) Inventeur: CHELLE, René, F-31190 Grepiac (FR)
(74) Mandataire: Morelle, Guy Georges Alain
(86) Numéro de dépôt international: PCT/FR2006/001335
(87) Numéro de publication internationale: WO 2006/136676

(56) Documents cités:
- EP-A- 0 440 975

## Description

La présente invention se rapporte au domaine de la production par fermentation de boissons à base de jus de fruits, en particulier la préparation d'une boisson alcoolisée à partir d'un jus de raisin.

Elle a pour objet un procédé de préparation d'un vin ou autre boisson fermentée à degré d'alcool réduit; faisant appel uniquement à des méthodes biologiques de fermentation de jus de fruits naturels. Il permet notamment de produire à partir d'un moût dont le potentiel alcoolique est communément de 8° à 15°, voire davantage, une boisson ayant un taux d'alcool inférieur d'au moins 4° à son potentiel alcoolique. L'invention a également pour objet un dispositif destiné à la préparation d'un tel breuvage.

Le vin est par définition le produit de la fermentation du raisin, le sucre contenu dans le jus étant transformé en alcool (singulièrement en éthanol) par l'action des levures. Il faut 17 grammes de sucre pour obtenir un degré d'alcool dans un litre de jus, le degré d'alcool d'un vin, dit degré Gay-Lussac (°GL), étant défini comme le pourcentage d'alcool en volume de la solution. La plupart des vins proposés à la consommation contiennent de 8° à 15° d'alcool.

On sait que la lutte contre l'alcoolisme est un enjeu important de santé publique, et que les consommateurs se tournent de plus en plus vers des produits peu alcoolisés, souvent appelés abusivement "sans alcool", qui leur permettent d'étancher leur soif, ou simplement de prolonger le plaisir de la dégustation, sans s'enivrer. Le succès de la bière dite sans alcool illustre cette tendance. Cependant, les vins sans alcools qui ont été proposés aux consommateurs n'ont pas été accueillis aussi favorablement. En effet, ces vins ont des caractéristiques gustatives peu développées, réduisant fortement le plaisir associé à leur absorption. Il sont obtenus par fermentation de la totalité des sucres présents dans le jus de fruit, puis extraction d'une partie de l'alcool formé par des méthodes physiques telles que distillation. Leur production nécessite donc au moins une étape supplémentaire qui en augmente le coût. Il semble en outre que cette extraction élimine ou dégrade en même temps la plupart des composés responsables des propriétés organoleptiques du vin. Ceci explique en grande partie le peu d'attrait rencontré par les vins dits sans alcool commercialisés jusqu'à présent.

Certains producteurs ont proposé des procédés comportant plusieurs étapes sous aération continue plus ou moins contrôlée, afin d'obtenir un vin à teneur réduite en alcool sans recourir à des méthodes physiques ou chimiques. EP 440 975 propose ainsi une première étape de fermentation alcoolique d'une fraction de jus sous apport limité en oxygène, ceci conduisant à une production d'alcool. Cette étape est ensuite suivie d'une respiration alcoolique en conditions aérobies après l'ajout d'une seconde fraction de jus. Ce procédé présente néanmoins des inconvénients, l'alcool produit lors de la première étape étant consommé au cours de la deuxième, réduisant ainsi le rendement. Le renouvellement de la population de levure n'est en outre plus assuré après consommation totale du sucre au cours de la deuxième étape.

La présente invention remédie à ces inconvénients grâce à un procédé naturel, faisant appel uniquement à des méthodes biologiques de culture et de fermentation des levures, peu onéreux et pouvant être mis en oeuvre sans équipements spécifiques coûteux. Ce procédé, pouvant fonctionner en continu et fondé sur des mécanismes de fermentation identiques à ceux qui sont communément employés dans la production des vins, est en outre à même de respecter l'alchimie complexe des composés aromatiques, pour obtenir un vin ou une boisson fermentée de faible degré alcoolique, possédant des qualités organoleptiques attractives pour les consommateurs. Un dispositif apte à être utilisé pour la mise en oeuvre du procédé ici décrit est également proposé et revendiqué.

La présente invention a donc pour objectif de disposer d'un procédé biologique de production d'un vin peu alcoolisé ou plus généralement d'une boisson fermentée peu alcoolisée dont les qualités aromatiques sont préservées. Un autre objectif de l'invention est de disposer d'un procédé permettant de moduler la teneur finale en alcool lors de la production d'un vin ou d'une boisson fermentée. Un autre objectif encore est de disposer d'un procédé permettant de maîtriser le taux final de sucre d'une boisson fermentée peu alcoolisée.

Un autre objectif encore est de proposer un dispositif permettant de mettre en oeuvre commodément le procédé selon l'invention, notamment pour la production en continu d'une boisson fermentée peu alcoolisée. Un objectif enfin, est de préparer une boisson peu alcoolisée qui réponde à la définition légale du vin.

Selon l'invention, à partir d'un moût ayant un potentiel alcoolique de 8° à 15°, voire davantage, on obtiendra un vin de degré alcoolique inférieur, pouvant se situer suivant les besoins, entre 4° et 10° alcooliques. Le produit final pourra, suivant l'objectif recherché, soit contenir du sucre résiduel, soit être épuisé complètement en sucre. Il pourra alors être consommé comme un vin de faible degré d'alcool mais possédant cependant l'essentiel des atouts d'un vin de 10° à 15° obtenu par un procédé classique, à savoir qualités organoleptiques, arômes, etc. Il pourra aussi servir de base à la préparation de cocktails faiblement alcoolisés constitués de ce vin à faible degré d'alcool additionné d'autres jus de fruits naturels ou à la préparation de boissons gazeuses.

On appellera "boisson fermentée" une boisson préparée à partir d'un jus de fruit dont au moins une partie du sucre a été transformée en alcool. Une boisson fermentée peut donc être plus ou moins sucrée et plus ou moins alcoolisée, étant entendu que sauf indication contraire, le sucre final de la boisson est le sucre présent initialement dans le jus de fruit et n'ayant pas été consommé par les levures. Le jus de raisin est le plus communément employé, mais tous les jus de fruits peuvent être utilisés pour préparer une boisson selon l'invention.

On désignera par "vin" une boisson fermentée dans laquelle la fermentation a été poursuivie jusqu'à son arrêt spontané, la totalité (ou la quasi-totalité) du sucre présent initialement dans le jus de fruit ayant été transformée en alcool. Un vin est généralement non sucré ou peu sucré.

On appellera "moût" un jus de fruit en cours ou en fin de fermentation alcoolique, avant filtration.

Le potentiel alcoolique d'un jus de fruit, noté A°, est défini comme le degré alcoolique qu'aura le vin obtenu à partir de ce jus par fermentation de la totalité (ou quasi-totalité) des sucres contenus initialement dans ledit jus.

Plus précisément, la présente invention a pour objet un procédé de préparation d'une boisson fermentée à faible degré d'alcool à partir d'un jus de fruit naturel comprenant essentiellement les étapes consistant à:
a)- alimenter un réacteur de culture aérobie contenant des levures en phase de multiplication avec une première fraction de jus de fruit;
b)- alimenter un réacteur de fermentation anaérobie avec le milieu chargé en levures obtenu à l'étape a) et une seconde fraction de jus de fruit, pour obtenir un moût;
c)- filtrer le moût pour séparer la levure et la boisson fermentée ainsi obtenue.

L'étape a) se déroule dans des conditions fortement aérobies, grâce à un apport permanent d'oxygène, en général par insufflation d'air, et à une agitation suffisante du milieu. Les levures présentes dans le réacteur de culture sont ainsi en phase de croissance, et consomment rapidement le sucre apporté par le jus de fruit pour les besoins énergétiques de leur multiplication. Les conditions de culture des levures, notamment des levures oenologiques sont biens connues de l'homme de l'art qui sait les adapter en fonction des caractéristiques des souches utilisées et du milieu nutritif.

L'étape b) se déroule dans des conditions anaérobies, nécessaires au processus de fermentation alcoolique. La fraction de jus de fruit introduite dans le réacteur de fermentation apporte le sucre qui sera transformé en alcool par les levures provenant du réacteur de culture. La fraction de jus de fruit provenant du réacteur de culture étant fortement atténuée en sucre ou n'en contenant plus, la quantité de sucre apportée dans le réacteur de fermentation par le jus de fruit total (somme des deux fractions de jus) est réduite d'autant. Il est ainsi possible de contrôler la quantité de sucre soumis à fermentation et par conséquent le degré d'alcool qu'aura finalement le vin issu du procédé selon l'invention. Pour cela, il suffit de calculer, connaissant la teneur initiale en sucre dans le jus, quels volumes de jus doivent être introduits dans chacun des réacteurs pour avoir la quantité de sucre désirée dans le fermenteur à transformer en alcool.

Ainsi, selon une caractéristique importante du procédé selon l'invention, les volumes relatifs des premières et secondes fractions de jus de fruit sont proportionnels au degré alcoolique final voulu de la boisson fermentée.

Il est également possible de produire un vin ou une boisson naturellement sucrés, en faisant en sorte que tout le sucre présent dans le fermenteur ne soit pas consommé. Ceci peut être obtenu de différentes manières, par exemple en diminuant la durée de séjour du moût dans le fermenteur. Dans ce cas, les volumes respectifs des fractions de jus de fruit introduites dans chacun des réacteurs devront tenir compte de la quantité de sucre résiduel désiré.

Selon une autre caractéristique avantageuse du procédé selon l'invention, les volumes relatifs des premières et secondes fractions de jus de fruit sont proportionnels au degré alcoolique final et au taux de sucre final voulus dans la boisson fermentée.

Selon une variante préférée de l'invention, le sucre de la première fraction de jus est consommé en totalité ou en quasi-totalité dans le réacteur de culture. On dispose alors en sortie du réacteur de culture d'un milieu chargé en cellules de levure, dont la phase liquide est essentiellement formée de jus de fruit débarrassé de son sucre. Cette première étape permet donc simultanément de produire des quantités importantes de levure et de réduire la quantité de sucre du jus de fruit total qui va être soumis ensuite à fermentation.

Lors de la mise en route du procédé, on démarre tout d'abord uniquement la culture cellulaire dans le réacteur de culture, puis quand la concentration est suffisante pour assurer un approvisionnement constant du réacteur de fermentation en levures tout en maintenant un taux de multiplication élevé, on démarre la fermentation. Les levures présentes dans le réacteur de fermentation proviennent donc essentiellement du réacteur de culture. Elles doivent être en concentration relativement élevée pour effectuer rapidement la fermentation une fois transférées dans le réacteur de fermentation avec la seconde fraction de jus. Selon une caractéristique préférée du procédé selon l'invention, on réalise l'étape b) lorsqu'on atteint une concentration en levures d'au moins 60 g/l, et de préférence au moins 90 g/l dans le réacteur de culture.

Selon une variante d'exécution de la présente invention, il est possible d'introduire la seconde fraction de jus de fruit non pas directement dans le fermenteur, mais dans le réacteur de culture, conjointement avec la première fraction. En pratique, les deux fractions de jus sont confondues, mais le volume de chacune de ces fractions théoriques peut être calculé selon le principe décrit ci-dessus, de sorte qu'on peut attribuer à chaque fraction la quantité de sucre lui correspondant et raisonner sur les quantités de sucres équivalentes, même si comme on vient de le dire, elles ne sont pas physiquement séparées. Selon l'invention, le jus doit séjourner dans ce réacteur uniquement le temps nécessaire à la consommation d'une quantité de sucre équivalent au sucre de la première fraction théorique permettant la même multiplication cellulaire que dans la variante de réalisation du procédé précédemment décrite. Le milieu ainsi obtenu, chargé en levures et contenant le sucre équivalent de la seconde fraction, est alors transféré dans le réacteur de fermentation. Tout se passe donc comme si les deux fractions étaient disjointes.

Ainsi selon une variante d'exécution du procédé selon l'invention, à l'étape a) on introduit les première et seconde fractions de jus de fruit dans le réacteur de culture, puis on les transfère ensemble dans le réacteur de fermentation.

Dans cette variante, la quantité de jus introduite dans le réacteur de culture est plus importante et la concentration en levure réduite en conséquence. C'est pourquoi, de préférence, on réalise l'étape b) lorsque la quantité équivalente de sucre de la première fraction de jus est consommée en totalité ou en quasi-totalité dans le réacteur de culture, et qu'on atteint une concentration en levures d'au moins 30 g/l, et de préférence au moins 45 g/l dans le réacteur de culture.

Les levures en phase de multiplication dans le réacteur de culture peuvent être des levures naturellement présentes dans le jus de fruit ou des levures exogènes inoculées. Il est en effet connu que les jus contiennent une flore endogène composée de bactéries et de levures. Les levures endogènes peuvent donc être à l'origine de la culture, ou bien il est possible d'initier la culture à l'aide de préparation de microorganismes de type starter.

Lorsque l'on inocule des levures choisies pour leurs propriété fermentatives, ou pour les qualités organoleptiques, il est préférable que d'autres souches ne se développent pas. On peut pour cela stériliser le jus de fruit, ou le traiter autrement, avant de le soumettre au procédé selon l'invention. C'est pourquoi, de manière alternative, les levures exogènes sont cultivées dans un jus de fruit préalablement traité pour détruire tout ou partie de sa flore endogène.

Selon une autre variante préférée du procédé selon l'invention, on réalise un apport complémentaire de nutriments dans le réacteur de culture. Cet apport est calculé de manière à ce que la population levurienne se développant activement, consomme l'essentiel de cet apport nutritif, choisi par l'homme de l'art parmi les compositions classiques à sa disposition.

Sauf incident spécifique inhérent aux processus microbiologiques que l'homme du métier saura résoudre, les populations microbiennes impliquées dans la vinification (majoritairement les populations levuriennes) seront ainsi toujours disponibles en quantité largement suffisante pour assurer la production d'alcool, sans que des souches indésirables puissent coloniser le moût.

Grâce à la concentration importante de levures disponibles, et à la réduction du taux d'alcool final, il est possible d'atteindre des vitesses de vinification beaucoup plus élevés que d'ordinaire, ce qui réduit énormément le temps de séjour du moût dans le réacteur de fermentation et augmente d'autant la productivité de ce réacteur. Du fait de ces performances inhabituelles, on peut envisager de travailler à des températures plus basses malgré leur effet modérateur du métabolisme, afin de mieux conserver les arômes, en particulier les arômes volatils. Une température de l'ordre de 8°C à 15°C sera possible. Le présent procédé, qui amplifie les performances cinétiques tout en modulant les caractéristiques du produit final, a donc également l'avantage de ne pas introduire de goût parasite.

Pour accroître encore la concentration en levures dans le réacteur de fermentation, et donc les performances du procédé selon l'invention, on pourra, si besoin est, recycler totalement ou partiellement les levures récupérées par le système de filtration du moût et les réintroduire dans le fermenteur ou même dans le réacteur de culture, sans que le goût du vin ne soit altéré. Ainsi selon une caractéristique préférée de l'invention, une partie au moins des levures recueillies après filtration est réintroduite dans le réacteur de fermentation ou dans le réacteur de culture.

Selon une autre caractéristique préférée de l'invention; à l'étape c), le moût est filtré par une technique de filtration choisie parmi la filtration frontale, la centrifugation, ou l'ultrafiltration tangentielle. Dans le cas où l'ultrafiltration tangentielle est utilisée, on obtient un produit final pratiquement stérile. Cette technique permet en outre de maintenir une certaine pression afin d'obtenir une boisson pétillante, ou même gazeuse.

De manière préférée, les conditions opératoires sont orientées de façon à donner au produit final, et notamment dans le cas de la production d'un vin, les caractéristiques aromatiques d'un vin de bonne tenue, ceci malgré le faible degré alcoolique qui est de l'avis général considéré comme un handicap de ce point de vue. Ces conditions permettent de compenser les arômes qui sont obtenus lorsque le taux d'alcool dépasse 5 °GL, donc dans la phase finale de consommation du sucre. En particulier, le moût obtenu en sortie de fermenteur peut subir un ou plusieurs autres traitements, appelés maturation, avant d'être filtré.

Selon une caractéristique intéressante, le moût séjourne dans un réacteur de maturation avant l'étape c) de filtration. La maturation consiste en un traitement destiné à enrichir les arômes du moût, par exemple en provoquant un vieillissement accéléré lorsque la législation l'autorise, ou encore en piégeant les molécules aromatiques volatiles produites pendant la fermentation. Les deux processus peuvent avantageusement être menés conjointement et réalisés dans un même réacteur.

Selon un mode de réalisation préféré, le moût transite dans le réacteur de maturation en percolant à travers un garnissage de copeaux de bois. Le moût peut être introduit par exemple en un point haut dans le réacteur de maturation et s'écouler en percolant à travers les copeaux de bois. Ce traitement, autorisé par la législation de certains pays, est destiné à améliorer les qualités gustatives du produit final en provoquant un vieillissement accéléré.

Selon un autre mode de réalisation préféré, le mélange gazeux chargé en arômes volatils issu du réacteur de fermentation traverse le moût séjournant dans le réacteur de maturation. De préférence encore, le mélange gazeux chargé en arômes volatils issu du réacteur de culture traverse le moût séjournant ans le réacteur de maturation.

Par exemple, le réacteur de maturation peut recevoir en un point bas le mélange gazeux issu du réacteur de culture et le gaz issu du réacteur de fermentation, entraînant avec eux les molécules volatiles des arômes léger. Le gaz traverse en remontant à contre-courant le moût en cours de maturation qui piège ces petites molécules et enrichit de la sorte son profil organoleptique.

Ce mécanisme est plus efficace à basse température. C'est pourquoi de préférence ledit réacteur de maturation est maintenu à une température comprise entre 2°C et 10°C par réfrigération pour mieux piéger les arômes. Un évent est prévu dans sa partie supérieure.

Selon une caractéristique avantageuse de l'invention, les transferts de matière sont réalisés en mode continu, à une vitesse réglable au moyen de vannes. En effet, selon les taux de sucre et d'alcool que l'on souhaite obtenir dans la boisson fermentée produite par le procédé selon l'invention, ainsi que les quantités initiales de jus de fruit introduites dans les réacteurs, les caractéristiques cinétiques sont importantes. Le temps de séjour du jus de fruit ou du moût dans les différents réacteurs sera aussi un paramètre à surveiller pour obtenir une cinétique réactionnelle adéquate. Dans un processus en continu, la vitesse d'introduction et de transfert des substances d'un réacteur à l'autre, y compris vers le système de filtration, devra être contrôlée. Des vannes seront donc judicieusement placées pour permettre un réglage et une régulation des flux de matière.

Le produit final obtenu par le procédé décrit ci-dessus est un vin ou une boisson fermentée, prêts à la consommation, ou pouvant encore subir des traitements complémentaires. Par exemple une étape de fermentation malolactique peut être prévue. Le produit pourra être commercialisé tel quel en tant que boisson vinique faiblement alcoolisée, mais possédant les caractéristiques d'un vin de bonne qualité. Il pourra au choix être additionné de jus d'autres fruits pour réaliser des cocktails. Ces jus de fruits pourront également être légèrement alcoolisés par fermentation de leur sucre par le procédé selon la présente invention. Les boissons obtenues auront des taux d'alcool et de sucre plus ou moins élevés, selon les conditions de mise en oeuvre du procédé choisies.

La présente invention a également pour objet un dispositif de préparation d'une boisson fermentée à faible degré d'alcool à partir d'un jus de fruit naturel, comprenant :
- un réacteur apte à réaliser la culture aérobie de levures en phase de multiplication,
- un réacteur apte à réaliser la fermentation anaérobie d'un jus de fruit par des levures, lesdits réacteurs de culture et de fermentation étant chacun doté de moyens d'introduction d'une fraction déterminée de jus de fruit,
- une unité de filtration du produit de fermentation, et
- des moyens pour le transfert des matières du réacteur de culture vers le réacteur de fermentation, et du réacteur de fermentation vers l'unité de filtration.

Les différents éléments de ce dispositif sont tout particulièrement conçus pour mettre en oeuvre le procédé qui vient d'être décrit, grâce à leur agencement spécifique. Le dispositif selon l'invention sera par conséquent décrit ici succinctement, sachant que les conditions opératoires telles que définies pour ledit procédé éclairent l'homme de l'art sur la structure que doivent adopter les éléments du dispositif. En particulier les réacteurs de culture et les réacteurs de fermentation, les systèmes de filtration, sont des équipements bien connus en eux-mêmes qu'il ne sera pas nécessaire de décrire en détail.

Selon une caractéristique du dispositif selon l'invention, le réacteur de culture est doté de moyens d'aération, d'un agitateur et de moyens de régulation de la température. Il permet la culture des levures dans des conditions fortement aérobies, favorisant une multiplication cellulaire active.

Selon une autre caractéristique du dispositif selon l'invention, le réacteur de fermentation est doté d'un agitateur et de moyens de régulation de la température. Il est apte à fonctionner dans des conditions anaérobies, nécessaires au processus de fermentation alcoolique.

Ces deux réacteurs sont équipés de moyens de régulation de la température afin d'assurer le contrôle des cinétiques réactionnelles selon l'objectif de production défini et de mieux conserver les arômes. Plus généralement le dispositif selon l'invention comporte des moyens de contrôle des paramètres de travail, tel que les débits, les températures, le pH, etc., que l'homme du métier sait choisir et utiliser.

Selon une autre caractéristique du dispositif selon l'invention, l'unité de filtration est choisie parmi un filtre frontal, une centrifugeuse, ou un ultrafiltre tangentiel. Une unité d'ultrafiltration tangentielle permet d'obtenir un produit final pratiquement stérile. Elle permet en outre de contrôler la teneur en gaz carbonique.

Afin de donner au produit final, et notamment dans le cas de la production d'un vin, les caractéristiques aromatiques d'un vin de bonne tenue, ceci malgré le faible degré alcoolique, selon un mode particulier de réalisation du dispositif selon l'invention, celui-ci comprend en outre au moins un réacteur de maturation placé avant l'unité de filtration.

Le réacteur de maturation peut être notamment équipé d'un ou plusieurs des éléments suivants :
- un garnissage de copeaux de bois,
- une entrée basse du mélange gazeux chargé des arômes volatils issu du réacteur de fermentation.
- une entrée basse du mélange gazeux provenant du réacteur de culture.
- des moyens de régulation de la température.

La fonction et l'utilité respectives de ces éléments pour la qualité du produit final ont été expliquées en détail plus haut. De manière préférée, le réacteur de maturation comprend une arrivée basse de gaz provenant du réacteur de culture et une arrivée basse de gaz provenant du réacteur de fermentation. Les courants gazeux entrant dans le réacteur de maturation en provenance des réacteurs de culture et de fermentation traversent donc le moût en circulant de bas en haut et échangent leurs arômes avec la phase liquide. Un évent est prévu dans la partie supérieure du réacteur de maturation.

Selon un mode particulier de réalisation du dispositif selon l'invention, l'unité de filtration est équipée de moyens de transfert de la matière retenue par le filtre vers le réacteur de fermentation. Il peut s'agir par exemple d'un simple conduit équipé d'une pompe. Il faut noter que le processus de fermentation peut se poursuivre, sous réserve que tout le sucre ne soit pas déjà consommé, jusqu'à la séparation des levures et du vin.

Quelle que soit la variante d'exécution retenue, lorsque le dispositif selon l'invention fonctionne en mode continu, il comprend de préférence des moyens de régulation de la vitesse de transfert des matières vers chaque réacteur, notamment des vannes ou des électrovannes.

Le procédé et le dispositif selon l'invention ici décrite sont particulièrement destinés à être appliqués à la préparation à partir d'un jus de fruit naturel, d'une boisson fermentée à faible degré d'alcool. Cette préparation se fait à partir des composants naturellement présents dans les matières premières utilisées, qui peuvent être un jus de raisin, un jus d'un autre fruit, ou même un mélange de ceux-ci.

Une boisson fermentée à faible degré d'alcool est obtenue à partir d'un jus de fruit naturel par le procédé selon l'invention. Cette boisson peut être plus ou moins sucrée et peut être plate, avec un degré de turbulence contrôlé.

D'autres avantages et propriétés intéressantes ressortiront mieux à la lumière des exemples suivants donnés à titre illustratif.
La Figure 1 représente schématiquement un dispositif selon l'invention, comprenant un réacteur de culture et un réacteur de fermentation, un système de filtration, ainsi qu'un réacteur de maturation par rétention d'arômes.
La Figure 2 représente schématiquement un dispositif selon l'invention, comprenant un réacteur de culture et un réacteur de fermentation, un système de filtration, ainsi qu'un réacteur de maturation par vieillissement accéléré et rétention d'arômes.

### EXEMPLE 1

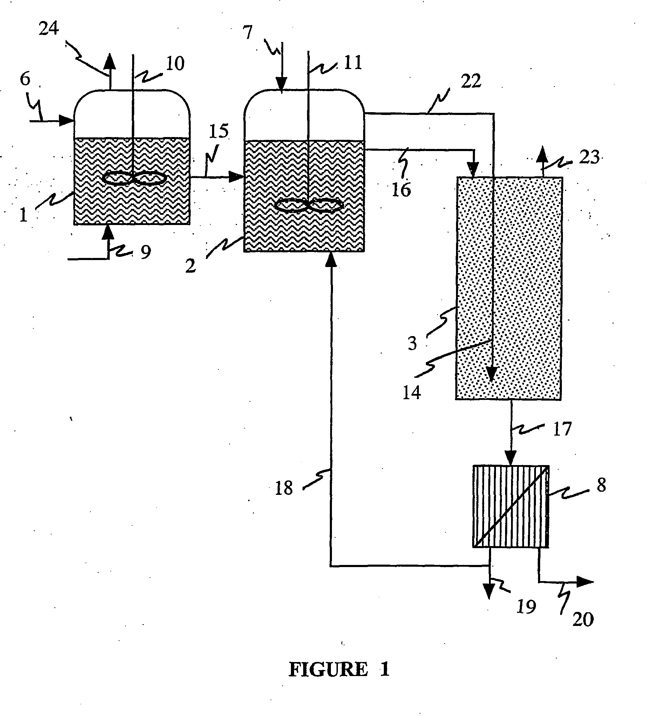

Le procédé selon l'invention peut être mis en oeuvre grâce au dispositif représenté sur la Figure 1. Ce dispositif comprend le réacteur de culture 1, le réacteur de fermentation 2, un système de filtration 8, ainsi que le réacteur de maturation 3.

Le réacteur de culture 1 est destiné à réaliser la culture aérobie de levures en phase de multiplication. Il est alimenté en la première fraction de jus de fruit par le conduit d'entrée 6. Il est doté de l'entrée d'air 9 et de l'agitateur 10 assurant une bonne oxygénation du milieu de culture.

Le réacteur de fermentation 2 est destiné à réaliser la fermentation anaérobie de la seconde fraction de jus de fruit introduite par le conduit 7, à l'aide des levures arrivant du réacteur de culture 1 par le conduit de liaison 15. Il est doté de l'agitateur 11, assurant l'homogénéité du milieu. Le moût est transféré du réacteur de fermentation 2 vers le réacteur de maturation 3 par le conduit 16, puis vers le filtre tangentiel 8 par le conduit 17.

Le réacteur de maturation 3 comprend l'arrivée basse de gaz 14 provenant du réacteur de fermentation 2 par le conduit 22. Il est aussi pourvu de l'évent 23.

L'unité de filtration 8 est équipée du conduit 18 pour le transfert d'un partie des levures retenues par le filtre vers le réacteur de fermentation 2. Le conduit 19 permet d'éliminer les levures en excès.

Le transfert de matière vers chaque réacteur et unité est contrôlé par des vannes (non représentées) placées par exemple sur les conduits d'entrée et/ou de sortie 6, 7, 15, 16, 17, 18,22.

Le conduit 20 permet de recueillir le produit final, vin ou boisson fermentée, selon les conditions opératoires choisies.

### EXEMPLE 2

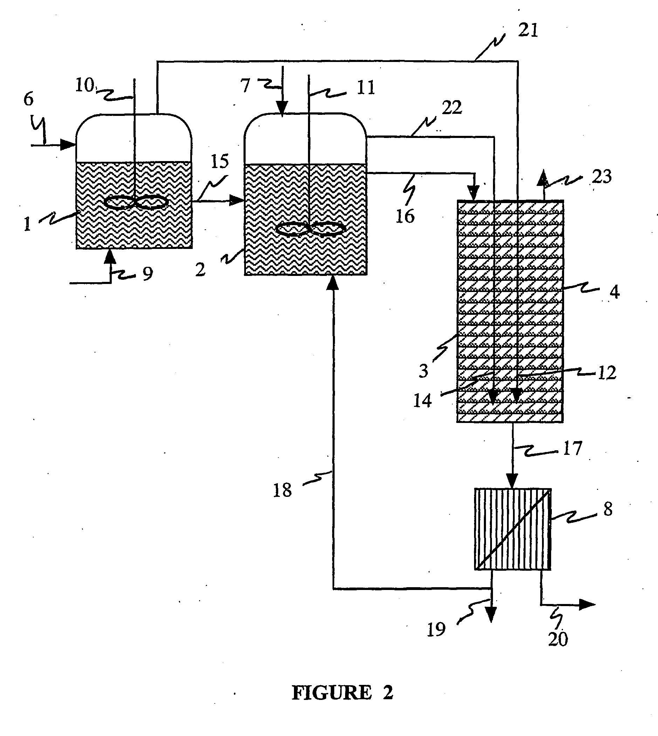

Le procédé selon l'invention peut également être mis en oeuvre grâce au dispositif de la Figure 2. Ce dispositif comprend le réacteur de culture 1, le réacteur de fermentation 2, un système de filtration 8, ainsi qu'un réacteur de maturation 3 par vieillissement accéléré et rétention d'arômes.

Le réacteur de culture 1 et le réacteur de fermentation 2 sont identiques à ceux décrit dans l'exemple 1. Le moût est transféré du réacteur de fermentation 2 vers le réacteur de maturation 3 par le conduit 16, puis vers le filtre tangentiel 8 par le conduit 17.

Le réacteur de maturation 3 comprend l'arrivée basse de gaz 12 provenant du réacteur de culture 1 par le conduit 21 et l'arrivée basse de gaz 14 provenant du réacteur de fermentation 2 par le conduit 22. Il est aussi pourvu de l'évent 23. Il contient un garnissage de copeaux de bois 4, sur lequel le moût s'écoule par percolation. Il est réfrigéré.

Le transfert de matière vers chaque réacteur et unité est contrôlé par des vannes (non représentées) placées par exemple sur les conduits d'entrée et/ou de sortie 6, 7, 15, 16, 17, 18, 21 et 22.

Le conduit 20 permet de recueillir le produit final, vin pétillant ou boisson sucrée gazeuse, selon les conditions opératoires choisies.

### EXEMPLE 3

La production d'un vin non sucré de degré alcoolique noté D° à partir d'un volume V de jus de raisin de potentiel alcoolique noté A° pourra être réalisé à l'aide du dispositif de l'exemple 1 comme suit. Le degré d'alcool du vin produit sera D° = yA°, avec 0 < y < 1. Le procédé est réalisé en mode continu.

On prépare deux fractions à partir du volume V de jus de raisin, telles que la première fraction F₁ a le volume V₁ = xV et la seconde fraction F₂ a le volume V₂ = yV, avec x + y=1.

Dans un premier temps, le réacteur de culture 1 est chargé en levures appartenant à une souche choisie en fonction des caractéristiques oenologiques et aromatiques de la boisson qu'on souhaite produire. Les nutriments, notamment minéraux, nécessaires à la croissance cellulaire, sont également ajoutés.

Puis la fraction F₁ du jus est introduite en continu dans le réacteur de culture 1, fortement brassé par l'agitateur 10 et aéré. On effectue la production de levures à la température optimale T₁, assurant le meilleur rendement de croissance et donc un temps minimal de séjour dans ce réacteur 1. La totalité du sucre apporté par le volume V₁ de la fraction F₁ est assimilé par les levures avec un rendement de 45 g de levures produites pour 100 g de sucre apporté.

Le milieu de culture chargé en levures est soutiré en continu par le conduit 15, et est transféré vers le fermenteur 2. Celui-ci est alimenté parallèlement par le conduit 7 par la fraction F₂ de jus. Le moût formé est brassé par l'agitateur 11 (sans que ce soit obligatoire) et fonctionne en anaérobiose, à la température T₂ choisie de façon à obtenir les meilleures caractéristiques organoleptiques du vin produit. Le moût est ensuite transféré vers le réacteur de maturation 3. Il y pénètre par le haut et sécoule progressivement, tout en étant en contact avec le mélange gazeux arrivant du réacteur de culture 1 par le conduit 21 et avec le gaz arrivant du réacteur de fermentation 2 par le conduit 22, les gaz étant injectés en un point bas du réacteur 3 et s'échappant par l'évent 23. Pour mieux piéger les arômes, le réacteur de maturation 3 est réfrigéré à une température T₃ comprise entre 2 et 10°C.

La quantité de sucre contenu dans le volume V₂ est alors totalement transformée en alcool.

Dans un autre mode de réalisation, le gaz s'échappant du réacteur de culture 1 peut être rejeté dans l'atmosphère par un évent 24, ou bien encore barboter ou percoler dans le moût d'un réacteur de maturation par rétention d'arômes.

Le vin est soutiré en continu par le conduit 20. Il a un degré d'alcool D° = yA°, puisque seul le sucre contenu dans le volume yV a été soumis à la fermentation et que l'alcool produit se trouve dans le volume final de vin obtenu qui est voisin du volume initial de jus de fruit introduit dans le dispositif, soit V = V₁ + V₂.

Pour la production d'une boisson sucrée, le même principe sera repris, mais le calcul des volumes V₁ + V₂ de jus de fruit devra tenir compte de la quantité de sucre résiduel souhaitée dans la boisson.

## Revendications

1. Procédé de préparation d'une boisson fermentée à faible degré d'alcool à partir d'un jus de fruit naturel ***caractérisé en ce qu*'**il comprend essentiellement les étapes consistant à:
a)- alimenter un réacteur de culture aérobie (1) contenant des levures en phase de multiplication avec une première fraction de jus de fruit;
b)- alimenter un réacteur de fermentation anaérobie (2) avec le milieu chargé en levures obtenu à l'étape a) et une seconde fraction de jus de fruit, pour obtenir un moût;
c)- filtrer le moût pour séparer la levure et la boisson fermentée ainsi obtenue.

2. Procédé selon la revendication 1 ***caractérisé en ce que*** les volumes relatifs des premières et secondes fractions de jus de fruit sont proportionnels au degré alcoolique final voulu de la boisson fermentée.

3. Procédé selon la revendication 1 ***caractérisé en ce que*** les volumes relatifs des premières et secondes fractions de jus de fruit sont proportionnels au degré alcoolique final et au taux de sucre final voulus dans la boisson fermentée.

4. Procédé selon l'une des revendications précédentes **caractérisé en ce que** le sucre de la première fraction de jus est consommé en totalité ou en quasi-totalité dans le réacteur de culture (1).

5. Procédé selon l'une des revendications précédentes **caractérisé en ce que** l'on réalise l'étape b) lorsqu'on atteint une concentration en levures d'au moins 60 g/l. dans le réacteur de culture (1).

6. Procédé selon la revendication précédente **caractérisé en ce que** l'on réalise l'étape b) lorsqu'on atteint une concentration en levures d'au moins 90 g/l dans le réacteur de culture (1).

7. Procédé selon la revendication 1 **caractérisé en ce que** à l'étape a) on introduit les première et seconde fractions de jus de fruit dans le réacteur de culture (1), puis on les transfère ensemble dans le réacteur de fermentation (2).

8. Procédé selon la revendication précédente **caractérisé en ce que** l'on réalise l'étape b) lorsqu'on atteint une concentration en levures d'au moins 30 g/l, dans le réacteur de culture (1) et que la quantité équivalente de sucre de la première fraction de jus est consommée en totalité ou en quasi-totalité dans le réacteur de culture (1).

9. Procédé selon la revendication précédente **caractérisé en ce que** l'on réalise l'étape b) lorsqu'on atteint une concentration en levures d'au moins 45 g/l dans le réacteur de culture (1) et que la quantité équivalente de sucre de la première fraction de jus est consommée en totalité ou en quasi-totalité dans le réacteur de culture (1).

10. Procédé selon l'une des revendications précédentes **caractérisé en ce que** les levures en phase de multiplication dans le réacteur de culture (1) sont des levures naturellement présentes dans le jus de fruit ou des levures exogènes inoculées.

11. Procédé selon l'une des revendications précédentes **caractérisé en ce que** les levures exogènes sont cultivées dans un jus de fruit préalablement traité pour détruire tout ou partie de sa flore endogène.

12. Procédé selon l'une des revendications précédentes **caractérisé en ce que** l'on réalise un apport complémentaire de nutriments dans le réacteur de culture (1).

13. Procédé selon l'une des revendications précédentes **caractérisé en ce que** le moût séjourne dans un réacteur de maturation (3) avant l'étape c) de filtration.

14. Procédé selon la revendication précédente **caractérisé en ce que** le moût transite dans le réacteur de maturation en percolant à travers un garnissage de copeaux de bois (4).

15. Procédé selon la revendication précédente **caractérisé en ce que** le mélange gazeux chargé en arômes volatils issu du réacteur de fermentation (2) traverse le moût séjournant dans le réacteur de maturation (3).

16. Procédé selon la revendication précédente **caractérisé en ce que** le mélange gazeux chargé en arômes volatils issu du réacteur de culture (1) traverse le moût séjournant dans le réacteur de maturation (3).

17. Procédé selon la revendication précédente **caractérisé en ce que** ledit réacteur de maturation (3) est maintenu à une température comprise entre 2°C et 10°C.

18. Procédé selon l'une quelconque des revendications précédentes **caractérisé en ce que**, à l'étape c), le moût est filtré par une technique de filtration choisie parmi la filtration frontale, la centrifugation, ou l'ultrafiltration tangentielle.

19. Procédé selon l'une quelconque des revendications précédentes **caractérisé en ce qu'**une partie au moins des levures recueillies après filtration est réintroduite dans le réacteur de fermentation (2) ou dans le réacteur de culture (1).

20. Procédé selon l'une quelconque des revendications précédentes **caractérisé en ce que** les transferts de matière sont réalisés en mode continu, à une vitesse réglable.

21. Dispositif de préparation d'une boisson fermentée à faible degré d'alcool à partir d'un jus de fruit naturel **caractérisé en ce qu'**il comprend
- un réacteur (1) apte à réaliser la culture aérobie de levures en phase de multiplication,
- un réacteur (2) apte à réaliser la fermentation anaérobie d'un jus de fruit par des levures, lesdits réacteurs de culture et de fermentation étant chacun doté de moyens d'introduction (6, 7) d'une fraction déterminée de jus de fruit,
- une unité de filtration (8) du produit de fermentation, et
- des moyens pour le transfert des matières du réacteur de culture (1) vers le réacteur de fermentation (2), et du réacteur de fermentation (2) vers l'unité de filtration (8).

22. Dispositif selon la revendication 21 **caractérisé en ce que** le réacteur de culture (1) est doté de moyens d'aération (9), d'un agitateur (10) et de moyens de régulation de la température.

23. Dispositif selon la revendication 21 ou 22 **caractérisé en ce que** le réacteur de fermentation (2) est doté d'un agitateur (11) et de moyens de régulation de la température.

24. Dispositif selon l'une des revendications 21 à 23 **caractérisé en ce que** l'unité de filtration (8) est choisie parmi un filtre frontal, une centrifugeuse, ou un ultrafiltre tangentiel.

25. Dispositif selon l'une des revendications 21 à 24 **caractérisé en ce qu'**il comprend en outre au moins un réacteur de maturation (3) placé avant l'unité de filtration (8).

26. Dispositif selon la revendication 25 **caractérisé en ce que** le réacteur de maturation (3) est équipé d'un ou plusieurs des éléments suivants :
- un garnissage de copeaux de bois (4),
- une entrée basse (14) du mélange gazeux chargé des arômes volatils issu du réacteur de fermentation (2).
- une entrée basse (12) du mélange gazeux provenant du réacteur de culture (1).
- des moyens de régulation de la température.

27. Dispositif selon l'une quelconque des revendications 21 à 26 **caractérisé en ce que** l'unité de filtration (8) est équipée de moyens de transfert de la matière retenue par le filtre vers le réacteur de fermentation (2).

28. Dispositif selon l'une quelconque des revendications 21 à 26 **caractérisé en ce qu'**il comprend des moyens de régulation de la vitesse de transfert des matières vers chaque réacteur.

29. Application du procédé selon l'une des revendications 1 à 20 ou du dispositif selon une des revendications 21 à 27 à la préparation à partir d'un jus de fruit naturel, d'une boisson fermentée à faible degré d'alcool.

## Claims

1. A method for preparing a fermented beverage with low alcohol content from a natural fruit juice, ***characterised in that*** said method essentially comprises the following steps:
(a)- feeding an aerobic culture reactor (1) containing yeasts in multiplication phase with a first fraction of fruit juice;
(b)- feeding an anaerobic fermentation reactor (2) with the medium loaded with yeasts obtained at step a) and with a second fraction of fruit juice to obtain a must;
(c)- filtering the must to separate the yeast and the resulting fermented beverage.

2. A method according to claim 1, ***characterised in that*** the relative volumes of the first and second fractions of fruit juice are proportional to the desired final degree of alcohol of the fermented beverage.

3. A method according to claim 1, ***characterised in that*** the relative volumes of the first and second fractions of fruit juice are proportional to the desired final degree of alcohol and the final sugar content of the fermented beverage.

4. A method according to one of the preceding claims, ***characterised in that*** the sugar in the first juice fraction is completely or nearly completely consumed in the culture reactor (1).

5. A method according to one of the preceding claims, ***characterised in that*** step (b) is carried out when a yeast concentration of at least 60 g/l is reached in the culture reactor (1).

6. A method according to the preceding claim, ***characterised in that*** step (b) is carried out when a yeast concentration of at least 90 g/l is reached in the culture reactor (1).

7. A method according to claim 1, ***characterised in that*** in step (a) the first and second fractions of fruit juice are fed into the culture reactor (1), then are transfered together into the fermentation reactor (2).

8. A method according to the preceding claim, ***characterised in that*** step b) is performed when a yeast concentration of at least 30 g/l has been reached in the culture reactor (1) and when the equivalent quantity of sugar in the first fraction has been consumed completely or almost completely in the culture reactor (1).

9. A method according to the preceding claim, ***characterised in that*** step b) is performed when a yeast concentration of at least 45 g/l has been reached in the culture reactor (1) and when the equivalent quantity of sugar in the first fraction has been consumed completely or almost completely in the culture reactor (1).

10. A method according to one of the preceding claims, *caracterised in that* the yeasts in the multiplication phase in the culture reactor (1) can be the yeasts naturally present in the fruit juice or inoculated exogenous yeasts.

11. A method according to one of the preceding claims, ***characterised in that*** the exogenous yeasts are cultivated in a fruit juice treated beforehand to eliminate all or part of its endogenous flora.

12. A method according to one of the preceding claims, ***characterised in that*** a supplementary supply of nutrients is provided in the culture reactor (1).

13. A method according to one of the preceding claims, ***characterised in that*** the must rests in a maturation reactor (3) before the filtration step (c).

14. A method according to claim 8, ***characterised in that*** the must passes through in the maturation reactor, percolating through packed wood chips (4).

15. A method according to the preceding claim, ***characterised in that*** the gaseous mixture charged with volatile aromas emerging from the fermentation reactor (2) passes through the must resting in the maturation reactor (3).

16. A method according to the preceding claim, ***characterised in that*** the gaseous mixture charged with volatile aromas emerging from the culture reactor (1) passes through the must resting in the maturation reactor (3).

17. A method according to the preceding claim, ***characterised in that*** said maturation reactor (3) is kept at a temperature between 2°C and 10°C.

18. A method according to any of the preceding claims, ***characterised in that**,* in step (c), the must is filtered using a filtering method selected from dead-end (frontal) filtration, centrifugation or tangential ultrafiltration.

19. A method according to any of the preceding claims, ***characterised in that*** at least part of the yeasts collected after filtration is fed once more into the fermentation reactor (2) or into the culture reactor (1).

20. A method according to any of the preceding claims, ***characterised in that*** the transfers of material take place in continuous mode at adjustable speed.

21. A device for preparing a fermented beverage with low alcohol content from a natural fruit juice, ***characterised in that*** it comprises:
- a reactor (1) suitable for carrying out the aerobic culture of yeasts in multiplication phase,
- a reactor (2) suitable for carrying out the anaerobic fermentation of a fruit juice by the yeasts, each of said culture and fermentation reactors being provided with means (6, 7) for feeding a prescribed fraction of fruit juice,
- a filtration unit (8) for filtering the fermentation product, and
- means for transferring the materials from the culture reactor (1) to the fermentation reactor (2), and from the fermentation reactor (2) to the filtration unit (8).

22. A device according to claim 21, ***characterised in that*** the culture reactor (1) comprises aeration means (9), an agitator (10) and means for regulating the temperature.

23. A device according to claim 21 or 22, ***characterised in that*** the fermentation reactor (2) comprises an agitator (11) and means for regulating the temperature.

24. A device according to one of claims 21 to 23, ***characterised in that*** the filtration unit (8) is selected from a dead-end (or frontal) filter, a centrifuge or a tangential ultrafilter.

25. A device according to one of claims 21 to 24, ***characterised in that*** it further comprises at least one maturation reactor (3) upstream of the filtration unit (8).

26. A device according to claim 25, ***characterised in that*** the maturation reactor (3) is fitted with one of more of the following elements:
- packed wood chips (4),
- an inlet (14) in its lower part for the gas mixture charged with volatile aromas from the fermentation reactor (2),
- an inlet (12) in its lower part for the gas mixture from the culture reactor (1),
- means for regulating the temperature.

27. A device according to any one of claims 21 to 26, ***characterised in that*** the filtration unit (8) is fitted with means for transferring the material trapped by the filter to the fermentation reactor (2).

28. A device according to any one of claims 21 to 26, ***characterised in that*** it comprises means for regulating the speed at which material is transferred to each reactor.

29. Use of the method according to any one of claims 1 to 20 or of the device according to any one of claims 21 to 27 for the preparation of a fermented beverage with low alcohol content from a natural fruit juice.

## Patentansprüche

1. Verfahren zur Herstellung eines vergorenen Getränks mit niedrigem Alkoholgrad ausgehend von einem natürlichen Fruchtsaft,
**dadurch gekennzeichnet,**
**dass** es im Wesentlichen die folgenden Schritte umfasst:
Befüllen eines aeroben Züchtungsreaktors (1), der Hefen in der Vermehrungsphase enthält, mit einer ersten Fruchtsaftfraktion;
Befüllen eines anaeroben Gärungsreaktors (2) mit dem im Schritt a) gewonnenen, hefehaltigen Medium und mit einer zweiten Fruchtsaftfraktion, um einen Most zu erzielen;
Filtern des Mosts, um die Hefe und das auf diese Weise hergestellte vergorene Getränk zu trennen.

2. Verfahren nach Anspruch 1,
**dadurch gekennzeichnet,**
**dass** die relativen Volumina der ersten und zweiten Fruchtsaftfraktionen proportional zum gewünschten endgültigen Alkoholgrad des vergorenen Getränks sind.

3. Verfahren nach Anspruch 1,
**dadurch gekennzeichnet,**
**dass** die relativen Volumina der ersten und zweiten Fruchtsaftfraktionen proportional zum gewünschten endgültigen Alkoholgrad und zum gewünschten endgültigen Zuckergehalt des vergorenen Getränks sind.

4. Verfahren nach einem der vorhergehenden Ansprüche,
**dadurch gekennzeichnet,**
**dass** der Zucker der ersten Fruchtsaftfraktion im Züchtungsreaktor (1) zur Gänze oder fast zur Gänze aufgebraucht wird.

5. Verfahren nach einem der vorhergehenden Ansprüche,
**dadurch gekennzeichnet,**
**dass** der Schritt b) durchgeführt wird, wenn eine Hefekonzentration von mindestens 60 g/l im Züchtungsreaktor (1) erreicht ist.

6. Verfahren nach dem vorhergehenden Anspruch,
**dadurch gekennzeichnet,**
**dass** der Schritt b) durchgeführt wird, wenn eine Hefekonzentration von mindestens 90 g/l im Züchtungsreaktor (1) erreicht ist.

7. Verfahren nach Anspruch 1,
**dadurch gekennzeichnet,**
**dass** im Schritt a) die erste und zweite Fruchtsaftfraktion in den Züchtungsreaktor (1) eingeführt werden und diese anschließend gemeinsam in den Gärungsreaktor (2) transferiert werden.

8. Verfahren nach dem vorhergehenden Anspruch,
**dadurch gekennzeichnet,**
**dass** der Schritt b) durchgeführt wird, wenn eine Hefekonzentration von mindestens 30 g/l im Züchtungsreaktor (1) erreicht ist und wenn die äquivalente Zuckermenge der ersten Saftfraktion im Züchtungsreaktor (1) zur Gänze oder fast zur Gänze aufgebraucht ist.

9. Verfahren nach dem vorhergehenden Anspruch,
**dadurch gekennzeichnet,**
**dass** der Schritt b) durchgeführt wird, wenn eine Hefekonzentration von mindestens 45 g/l im Züchtungsreaktor (1) erreicht ist und wenn die äquivalente Zuckermenge der ersten Saftfraktion im Züchtungsreaktor (1) zur Gänze oder fast zur Gänze aufgebraucht ist.

10. Verfahren nach einem der vorhergehenden Ansprüche,
**dadurch gekennzeichnet,**
**dass** die Hefen in der Vermehrungsphase im Züchtungsreaktor (1) natürlich im Fruchtsaft vorkommende Hefen oder exogene, eingeimpfte Hefen sind.

11. Verfahren nach einem der vorhergehenden Ansprüche,
**dadurch gekennzeichnet,**
**dass** die exogenen Hefen in einem Fruchtsaft gezüchtet werden, der vorher behandelt wurde, um die Gesamtheit oder einen Teil seiner endogenen Flora zu vernichten.

12. Verfahren nach einem der vorhergehenden Ansprüche,
**dadurch gekennzeichnet,**
**dass** eine zusätzliche Zufuhr von Nährstoffen in den Züchtungsreaktor (1) durchgeführt wird.

13. Verfahren nach einem der vorhergehenden Ansprüche,
**dadurch gekennzeichnet,**
**dass** der Most vor dem Filterungsschritt c) in einem Reifungsreaktor (3) verweilt.

14. Verfahren nach dem vorhergehenden Anspruch,
**dadurch gekennzeichnet,**
**dass** der Most in den Reifungsreaktor transferiert wird, indem er durch eine Füllung aus Holzspänen (4) perkoliert.

15. Verfahren nach dem vorhergehenden Anspruch,
**dadurch gekennzeichnet,**
**dass** die aus dem Gärungsreaktor (2) austretende Gasmischung, die flüchtige Aromen enthält, durch den im Reifungsreaktor (3) verweilenden Most strömt.

16. Verfahren nach dem vorhergehenden Anspruch,
**dadurch gekennzeichnet,**
**dass** die aus dem Züchtungsreaktor (1) austretende Gasmischung, die flüchtige Aromen enthält, durch den im Reifungsreaktor (3) verweilenden Most strömt.

17. Verfahren nach dem vorhergehenden Anspruch,
**dadurch gekennzeichnet,**
**dass** der Reifungsreaktor (3) auf einer Temperatur zwischen 2°C und 10°C gehalten wird.

18. Verfahren nach einem der vorhergehenden Ansprüche,
**dadurch gekennzeichnet,**
**dass** im Schritt c) der Most mittels einer Filterungstechnik gefiltert wird, die unter Frontalfilterung, Zentrifugation oder tangentielle Ultrafiltration gewählt wird.

19. Verfahren nach einem der vorhergehenden Ansprüche,
**dadurch gekennzeichnet,**
**dass** mindestens ein Teil der nach der Filterung gesammelten Hefen wieder in den Gärungsreaktor (2) oder in den Züchtungsreaktor (1) eingeführt wird.

20. Verfahren nach einem der vorhergehenden Ansprüche,
**dadurch gekennzeichnet,**
**dass** die Transfers der Materien auf kontinuierliche Weise mit einstellbarer Geschwindigkeit erfolgen.

21. Vorrichtung zur Herstellung eines vergorenen Getränks mit niedrigem Alkoholgrad ausgehend von einem natürlichen Fruchtsaft,
**dadurch gekennzeichnet,**
**dass** sie umfasst:
einen Reaktor (1), der geeignet ist, die aerobe Züchtung von Hefen in der Vermehrungsphase durchzuführen,
einen Reaktor (2), der geeignet ist, die anaerobe Gärung eines Fruchtsafts durch Hefen durchzuführen, wobei der Züchtungs- und Gärungsreaktor jeweils mit Mitteln zum Einführen (6, 7) einer bestimmten Fruchtsaftfraktion versehen sind,
eine Einheit zur Filterung (8) des Gärungsprodukts, und
Mittel zum Transferieren der Materien vom Züchtungsreaktor (1) zum Gärungsreaktor (2) und vom Gärungsreaktor (2) zur Filterungseinheit (8).

22. Vorrichtung nach Anspruch 21,
**dadurch gekennzeichnet,**
**dass** der Züchtungsreaktor (1) mit Belüftungsmitteln (9), einem Rührwerk (10) und Mitteln zur Einstellung der Temperatur versehen ist.

23. Vorrichtung nach Anspruch 21 oder 22,
**dadurch gekennzeichnet,**
**dass** der Gärungsreaktor (2) mit einem Rührwerk (11) und Mitteln zur Einstellung der Temperatur versehen ist.

24. Vorrichtung nach einem der Ansprüche 21 bis 23,
**dadurch gekennzeichnet,**
**dass** die Filterungseinheit (8) unter einem Frontalfilter, einer Zentrifuge oder einem tangentialen Ultrafilter gewählt wird.

25. Vorrichtung nach einem der Ansprüche 21 bis 24,
**dadurch gekennzeichnet,**
**dass** sie darüber hinaus mindestens einen Reifungsreaktor (3) umfasst, der vor der Filterungseinheit (8) angeordnet ist.

26. Vorrichtung nach Anspruch 25,
**dadurch gekennzeichnet,**
**dass** der Reifungsreaktor (3) mit einem oder mehreren der folgenden Elemente versehen ist:
einer Füllung aus Holzspänen (4),
einem unteren Einlass (14) für die aus dem Gärungsreaktor (2) austretende Gasmischung, die flüchtige Aromen enthält,
einem unteren Einlass (12) für die aus dem Züchtungsreaktor (1) kommende Gasmischung,
Mitteln zur Einstellung der Temperatur.

27. Vorrichtung nach einem der Ansprüche 21 bis 26,
**dadurch gekennzeichnet,**
**dass** die Filterungseinheit (8) mit Mitteln zum Transferieren der vom Filter zurückgehaltenen Materie zum Gärungsreaktor (2) versehen ist.

28. Vorrichtung nach einem der Ansprüche 21 bis 26,
**dadurch gekennzeichnet,**
**dass** sie Mittel zur Einstellung der Geschwindigkeit des Transfers der Materien zu jedem Reaktor umfasst.

29. Anwendung des Verfahrens nach einem der Ansprüche 1 bis 20 oder der Vorrichtung nach einem der Ansprüche 21 bis 27 zur Herstellung eines vergorenen Getränks mit niedrigem Alkoholgrad ausgehend von einem natürlichen Fruchtsaft.
